# EUROPEAN PATENT SPECIFICATION

(11) **EP 1 292 530 B1**
(45) Date of publication and mention of the grant of the patent: **28.06.2006**
(21) Application number: 01933033.1
(22) Date of filing: 04.05.2001
(51) Int. Cl.: C01B 7/01, C01B 3/32

(54) **METHODS AND APPARATUS FOR ENHANCING THE PRODUCTION OF GAS IN AN OXIDATION PROCESS**
METHODE UND VORRICHTUNG ZUR ERHÖHUNG DER GASERZEUGUNG IN EINEM OXIDATIONSVERFAHREN
PROCEDE ET APPAREIL D'AMELIORATION DE LA PRODUCTION DE GAZ DANS UN PROCEDE D'OXYDATION

(30) Priority: 05.05.2000 US 566203
(43) Date of publication of application: 19.03.2003
(73) Proprietor: DOW GLOBAL TECHNOLOGIES INC., Midland, Michigan 48674 (US)
(72) Inventor: LIPP, Charles, W., Lake Jackson, TX 77566 (US)
(74) Representative: Raynor, John
(86) International application number: PCT/US2001/014496
(87) International publication number: WO 2001/085605

(56) References cited:
- EP-A- 0 460 697
- WO-A-97/48479
- WO-A-99/32397

## Description

The invention pertains to methods and apparatus for enhancing the production of gas in an oxidation process and in particular to methods and apparatus for dealing with aerosols prior to a gas finishing column.

Related inventions include a prior patent application for a Method and Apparatus for the Production of One or More Useful Products from Lesser Value Halogenated Materials, PCT international application PGT/CTS/98/26298, published 1 July 1999, international publication number WO 99/32937. The PCT application discloses processes and apparatus for converting a feed that is substantially comprised of halogenated materials, especially byproduct and waste chlorinated hydrocarbons as they are produced from a variety of chemical manufacturing processes, to one or more "higher value products" via a partial oxidation reforming step in a gasification reactor.

The term "oxidation process" as used herein refers to a gasification process or a thermal treatment process generally, in which an absorption column is employed upstream of a gas finishing column. Typically, in such processes, acid is typically absorbed from a gaseous stream into water. Under proper design and process conditions a concentrated aqueous acid can be drawn from an absorber column. Such high quality acid, under some conditions or circumstances, may be purified or further processed and sold as product, including an anhydrous product.

Additionally, a synthesis gas (syngas) comprised primarily of carbon monoxide and hydrogen and containing lesser amounts of water vapor and carbon dioxide, may be recovered from the top of an absorption column. This gaseous stream can be further processed in a gas finishing unit, under some circumstances to a saleable or usable product. A gas finishing unit typically includes a gas finishing column or secondary polishing scrubber to remove small amounts of acid that may yet be contained in the process gaseous stream.

However, during prior upstream processes, such as quenching, scrubbing and absorption, an aerosol containing micrometer-sized droplets of liquid acid can be formed in the process gaseous stream. Such aerosol may be formed, for instance, when a rate of heat transfer is greater than a rate of mass transfer, resulting in a super saturation of a vapor phase and heterogeneous nucleation. The formation of aerosols in a gaseous process stream depends on inlet conditions in a path of absorption. Preventing aerosol formation under process conditions is typically difficult, given the present stage of understanding of the phenomena.

Once formed, an acid aerosol (or "fog") is regrettably resistant to absorption in conventional packed or tray column absorbers or finishing units. One solution is to resort to additional intensive scrubbing technology, of the sort typically employed for removing fine particles, such as high energy venturi scrubbers, ionizing wet scrubbers and deep bed fiber pad filters.

As a novel and improved alternative for dealing with acid aerosols from the absorber column, the present invention teaches heating the process gaseous stream ("gaseous stream" being used herein to indicate gas and/or vapor and/or aerosol) after an acid absorber process step and prior to a gas finishing step. The heating reduces the relative humidity of the gaseous stream, typically from complete saturation to slightly less than saturation (approximately 80 percent). Given a sufficient residence time (which should approximate a second in some situations) the acid aerosol may be completely evaporated. Most importantly, the finest drops at least are evaporated. The gaseous stream, with substantially all acid vaporized, can then be efficiently and effectively scrubbed in a secondary scrubber or gas finishing column. This gas finishing column is a process step that employs standard process operations and well known methods. Because of the now high degree of diffusion of the acid gas or vapor in the gaseous stream, a standard gas finishing column can largely remove the residual acid gas.

Heating the process gaseous stream between an absorber unit and a gas finishing column can be accomplished in different ways. One preferred embodiment is to use a heat exchanger to reheat all, or a portion of, the process gaseous stream. Because, however, the process gaseous stream contains small amounts of acid, the materials of construction of such a heat exchanger must be chosen carefully. A second preferred method is to recycle a small amount of heated finished gas, from downstream of the secondary scrubber or gas finishing column. The finished gas may be heated as a matter of course, as in a compressor for instance downstream of the gas secondary finishing column. A portion of this heated dry finished gas can be recycled and mixed with the gaseous stream upstream of the gas finishing column to achieve a desired relative humidity and temperature such that, within the residence time provided, at least a substantial amount of the acid droplets comprising an aerosol in the process gaseous stream are vaporized. Preferably the acid aerosol vaporization is complete.

The invention includes methods for enhancing the production of acid-free synthesis gas in an oxidation process, by heating a gaseous stream from an absorption unit which includes an acid aerosol, to vaporize at least a substantial amount of acid droplets carried in the gaseous stream. The method includes flowing the heated gaseous stream to a gas finishing column. In one embodiment, the heating is accomplished by recycling a portion of a heated gas from downstream of the gas finishing column into the gaseous stream between the absorption unit and the gas finishing column. According to a second embodiment, the gaseous stream is heated with a heat exchanger. A further method includes heating by mixing in an unrecycled hot dry gas, such as air. A combination of these methods may be employed. Preferably the method in all cases provides sufficient residence time between the heating and/or mixing step and the gas finishing column to permit vaporization of substantially all acid droplets compromising the aerosol in the gaseous stream from the absorption unit.

The invention also includes apparatus for use in the production of a synthesis gas in an oxidation process. The apparatus includes an acid absorber column in fluid communication with, and upstream of, a heat exchanger which in turn is in fluid communication with, and upstream of, a gas finishing column. Alternately the apparatus includes gas mixing apparatus (for example, a, multiport gas sparger and static mixer in combination) in place of the heat exchanger and either lines for recycling gas from downstream of the gas finishing column to the gas mixer or lines for otherwise connecting the mixer with a source of hot dry gas.

A better understanding of the present invention can be obtained when the following detailed description of the preferred embodiment is considered in conjunction with the following drawings, in which:
Figure 1 is a block flow diagram of an embodiment of a gasification process, in this example a gasification process for halogenated materials.
Figure 2 illustrates an embodiment of a gasifier for use in a gasification process, in this case a gasification process for halogenated materials, as per Figure 1.
Figure 3 illustrates an embodiment of a quench unit for use in a gasification process for halogenated materials, as per Figure 1.
Figure 4 illustrates an embodiment of an acid absorber unit for use in a gasification process, as per the example of Figure 1.
Figures 5A and 5B illustrate embodiments for a gas finishing unit, as per the example of Figure 1, including preferred embodiments of the instant invention.

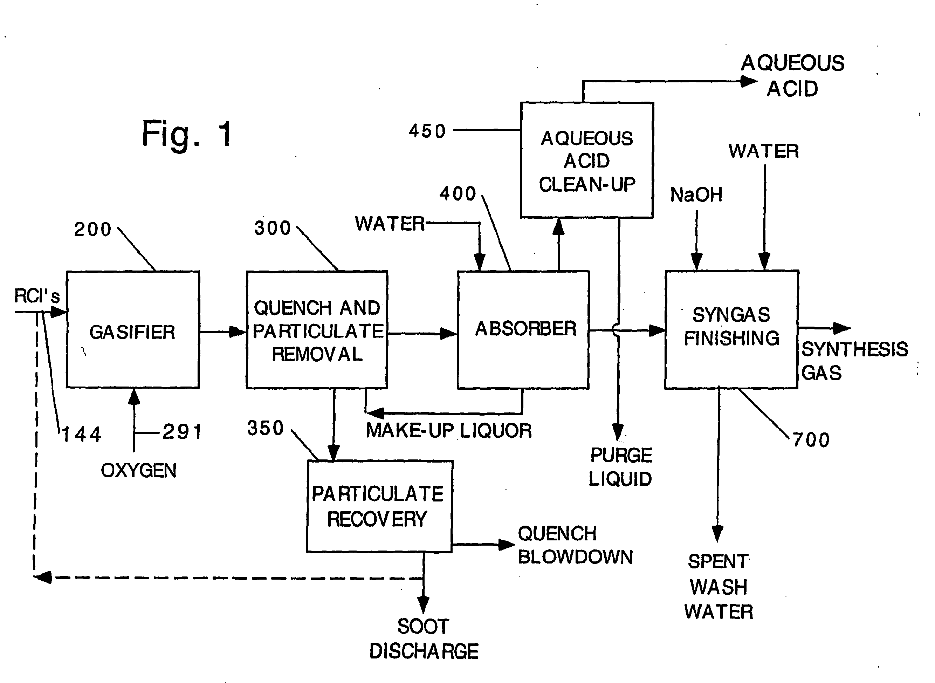

A particular embodiment of a gasification process for halogenated materials is discussed for background purposes, to illustrate the instant problem and its solution. The embodiment of the process is comprised of five major processing areas, illustrated in the block flow diagram of Figure 1.
1. Gasifier 200
2. Quench 300
3. Particulate Removal and Recovery 350
4. Aqueous HCl Recovery and Clean-up 400, 450
5. Syngas Finishing 700
Each area of the embodiment will be discussed briefly, using RCl's (chlorinated organic materials) as an exemplary halogenated feed material.

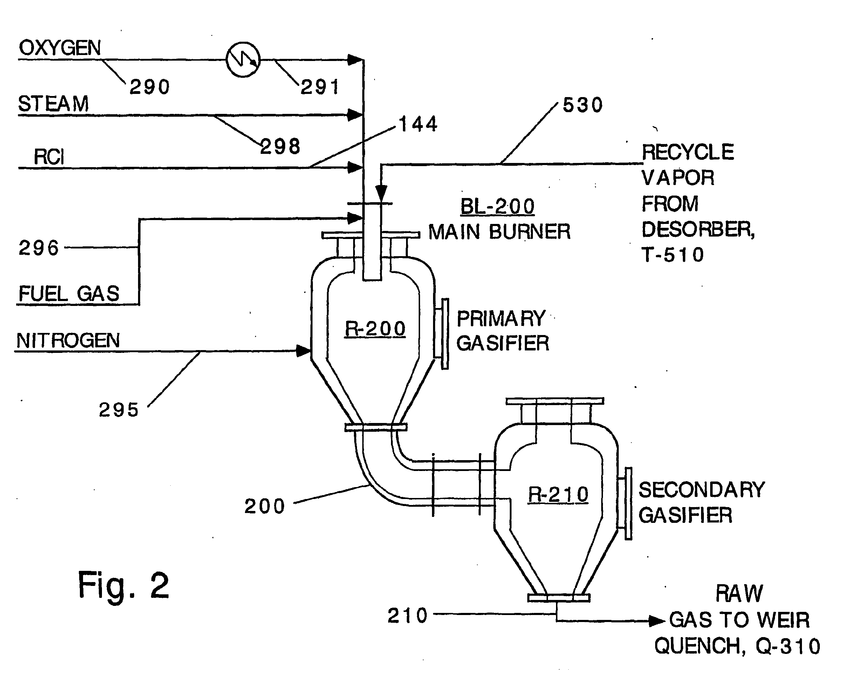

Initially, the RC1 or halogenated material feeds are preferably mixed in a feed tank from which they may be pumped through a preheater and supplied to gasifier area 200 as shown in Figure 2. In gasifier area 200, and in keeping with the teachings of our prior application referenced above, the gasification of the RC1 stream 144 is preferably accomplished in a primary gasifier R-200 and in a secondary gasifier R-210. The stream 144 is thus atomized into the primary reactor R-200 with oxygen 291 and steam 298 via main burner BL-200. In a harsh gasification environment (operating temperatures and pressures in R-200 preferably being on the order of 1450°C and 5 bars gauge (75 psig)), the RC1 or the like components are partially oxidized and converted to carbon monoxide, hydrogen chloride, hydrogen and lesser amounts of water vapor and carbon dioxide, with trace amounts of other substances including soot (being essentially carbon). The products from R-200 then flow into the secondary reactor R-210, where all reactions proceed to completion, thus yielding high efficiencies for all halogenated species and tending to minimize undesirable side products such as soot. Primary gasifier R-200, in the preferred embodiment illustrated, functions as a down fired, jet stirred reactor, the principal purposes of which are to atomize the liquids fed to R-200, evaporate the liquids, and thoroughly mix the vaporized feed with oxygen, moderator, and hot reaction products. Secondary gasifier R-210 exhibits plug flow characteristics, and is principally designed to provide sufficient residence time for the complete reformation of materials to the desired synthesis gas and hydrogen halide products.

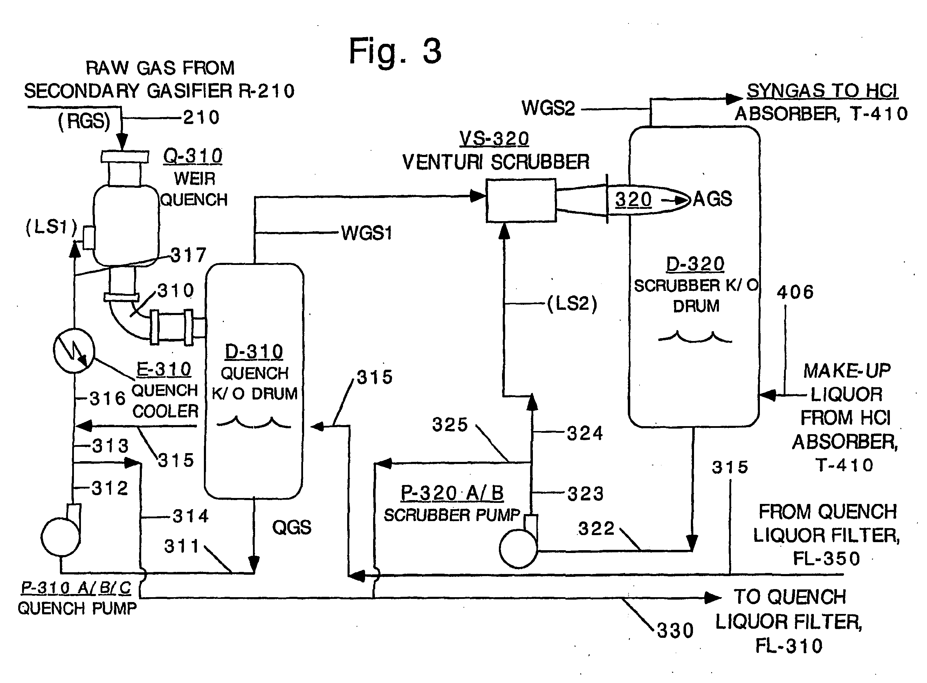

Hot gases from the reactor R-210 are cooled in a quench unit 300 by direct contact with a circulating aqueous stream. Figure 3 illustrates an embodiment of a quench unit. The reactor effluent syngas and recirculating aqueous stream are mixed in a weir quench vessel. The mixture then flows to a vapor-liquid separator drum from which a quenched gaseous stream passes overhead and a bottoms liquid is cooled and recycled to the quench. At least a slip stream of the bottoms liquid is preferably flowed to a filter unit to remove entrained solids.

Particulates in the gaseous stream passing overhead from the quench vapor-liquid separator, consisting primarily of soot, are preferably scrubbed from the gaseous stream in an atomizer or scrubber, preferably a wet venturi scrubber.

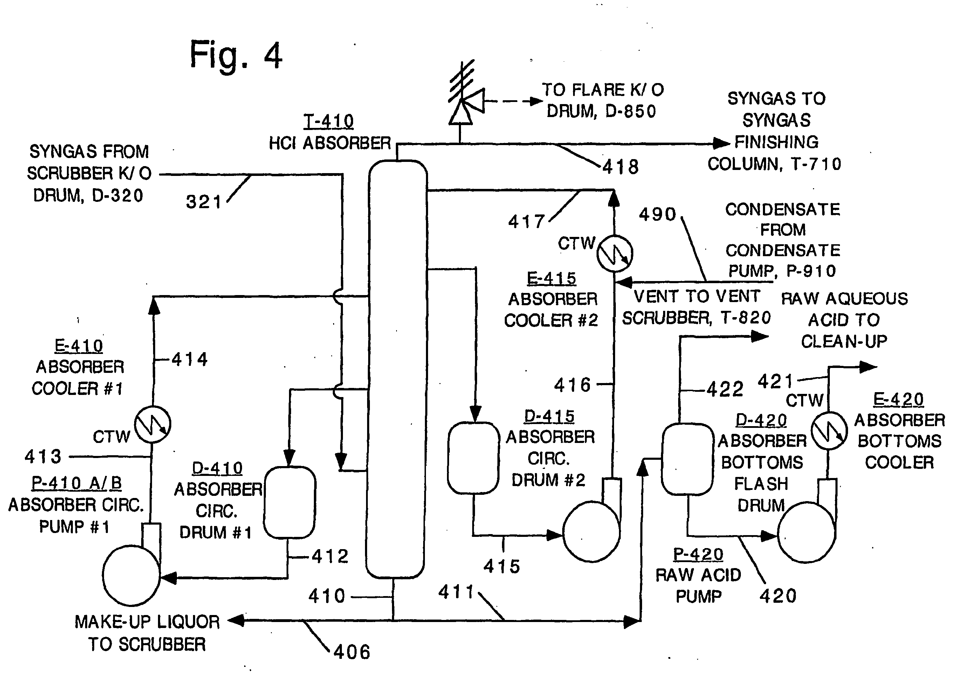

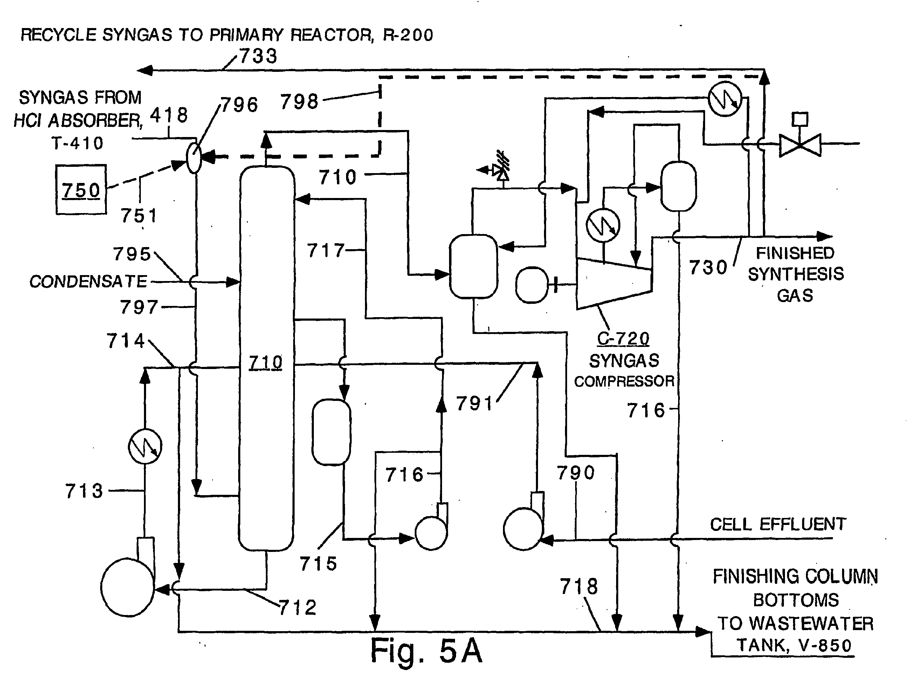

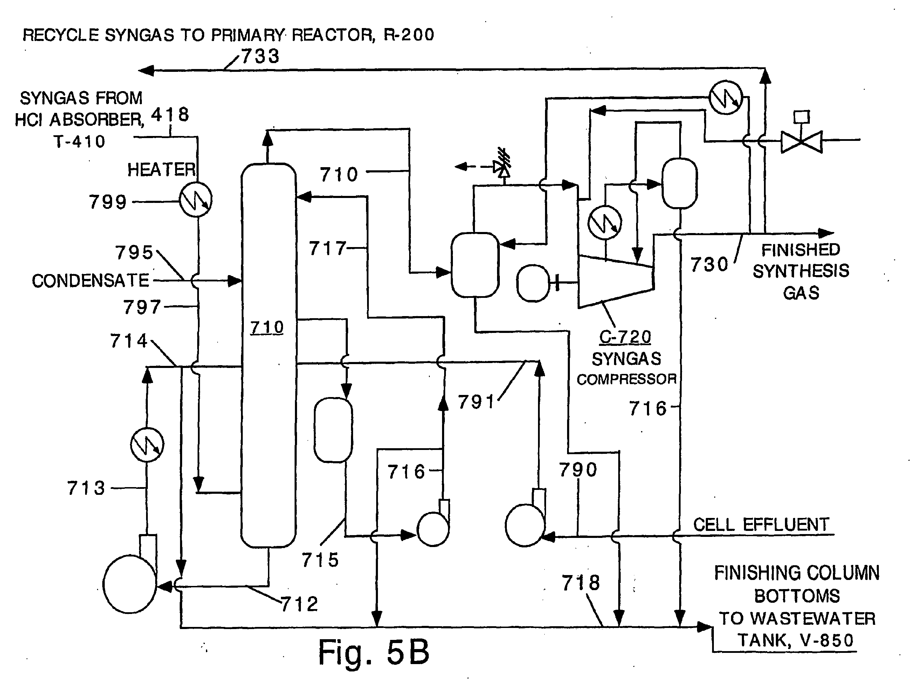

From quench area 300, a particulate free syngas gaseous stream from the vapor-liquid separator scrubber is introduced into an HCl absorption column 400, illustrated more particularly in Figure 4. A gaseous stream of noncondensible syngas components, including some acid aerosol, passes through the absorber overheads and on to a syngas finishing unit 700, discussed in more detail below, in connection with Figures 5A and 5B.

In absorption unit 400, HCl in the syngas gaseous stream is absorbed to form a concentrated aqueous acid bottoms stream. This aqueous acid stream is preferably filtered and passed through an adsorption bed 450 to remove final traces of particulate and organics, yielding an aqueous HCl product.

A caustic scrubber or finishing tower and a syngas flare system are elements that can form part of a syngas finishing unit 700. A preferred embodiment of a caustic scrubber, or syngas finishing column, uses cell effluent in a lower section of a column to absorb final traces of HCl from the syngas gaseous stream flowing from the absorber unit 400. Water can be used in the upper section of the column as a final wash of the product syngas. The overhead syngas product can be piped or flared to a dedicated flare system. The spent solution from the column bottoms can flow to a suitable waste water treatment facility.

Having now described a gasification process in general terms in which the present invention may find use, preferred embodiments according to the present invention may now be described. Referring in particular to Figure 5A, gaseous stream 418 enters gas finishing unit 700 from absorber unit 400. A recycle stream 798 can be derived from a finished syngas stream 730 which possesses an elevated temperature (relative to the stream 418) by virtue of being compressed in compressor C-720. Mixing stream 418 with stream 798 in static mixer 796 increases the temperature of the mixture stream 797 and lowers its relative humidity. Mixer 796 can provide appropriate valving to maintain an optimum flow rate for stream 798 as carried in appropriate lines branching off from stream 730. Gas stream 730 from compressor C-720 is also of low absolute humidity, further reducing the average humidity of the mixture. Static mixer 796 is preferably provided to help assure a complete and rapid mixing of the gas streams. The transit time in the piping between gas mixer 796 and gas finishing column T-710 should be designed to provide the necessary residence time to achieve a complete or almost complete evaporation of the aerosol in gaseous stream 418. Residence times on the order of 1 second should be sufficient in most cases.

In an alternate embodiment, a source 750 of a non-recycled hot gas, such as air, can be placed in fluid communication with the gas mixer 796 to provide an appropriate stream 751 of hot gas to mix with process stream 418, so achieving complete or nearly complete evaporation of the aerosol in gaseous stream 418 prior to finishing column T-710. Such embodiment might have particular application in a thermal treatment process.

In a third embodiment, illustrated in Figure 5B, a heat exchanger 799 comprised of the requisite materials to withstand acid corrosion, can be provided in place of gas mixer 796. All or a portion of gaseous stream 418 may be heated in order to effect the requisite evaporation of acid droplets in aerosol form in stream 418, prior to stream 797 reaching gas finishing column T-710.

Obviously, a combination of heat exchange and mixing in of hot gases is also contemplated. The foregoing disclosure and description of the invention are illustrative and explanatory thereof, and various changes in the size, shape, and materials, as well as in the details of the illustrated system may be made without departing from the spirit of the invention. The invention is claimed using terminology that depends upon a historic presumption that recitation of a single element covers one or more such elements, and recitation of two elements covers two or more elements of the specified description anc character.

## Claims

1. A method for enhancing the production of synthesis gas in an oxidation process, comprising:
heating a gaseous stream from an acid absorption unit, the stream including liquid aerosol, to vaporize at least a substantial amount of the acid droplets comprising the aerosol; and
flowing the heated gaseous stream to a gas finishing column.

2. The method of claim 1 that includes heating by mixing a hot dry gas into the gaseous stream with liquid aerosol.

3. The method of claim 2 wherein the hot dry gas includes air.

4. The method of claim 2 that includes heating by recycling into the gaseous stream a heated gas produced downstream of the gas finishing column.

5. The method of claim 4 wherein the heating includes mixing the gaseous stream and the recycled stream in a gas mixer.

6. The method of claim 1 that includes producing syngas.

7. The method of claim 6 that includes gasifying halogenated materials.

8. The method of claim 2 that includes providing sufficient residence time for the mixed gas and stream prior to the gas finishing column to permit substantially complete vaporization of the acid droplets.

9. The method of claim 1 that includes heating at least a portion of the gaseous stream in a heat exchanger:

10. Apparatus for enhancing the production of synthesis gas in a gasification process, comprising:
an acid absorber column in fluid communication with, and upstream of, a gas mixer in fluid communication with, and upstream of, a gas finishing column; and
lines for recycling heated gas from downstream of the gas finishing column to the gas mixer.

11. The apparatus of claim 10 including lines providing fluid communication between the gas mixer and the gas finishing column of sufficient length to provide a residence time to permit the vaporization of at least a substantial amount of acid contained in liquid droplets.

12. The apparatus of claim 10 that includes a gas heater downstream of the finishing column.

13. Apparatus for enhancing the production of synthesis gas in an oxidation process, comprising:
an acid absorber column in fluid communication with, and upstream of, a heat exchanger in fluid communication with, and upstream of, a gas finishing column.

14. The apparatus of claim 13 wherein the acid absorber column is structured to absorb hydrogen halides.

15. The apparatus of claim 13 wherein the gas finishing column is structured to finish syngas.

16. Apparatus for the production of synthesis gas in an oxidation process, comprising:
an acid absorber column in fluid communication with, and upstream of, a gas mixer, in fluid communication with, and upstream of, a gas finishing column; and
a source of heated dry gas in communication with the gas mixer.

17. The apparatus of claim 16 wherein the dry gas includes air.

## Patentansprüche

1. Ein Verfahren zum Verbessern der Produktion von Synthesegas in einem Oxidationsprozess, umfassend:
Erhitzen eines gasförmigen Stroms aus einer Säureabsorptionseinheit, wobei der Strom ein flüssiges Aerosol umfasst, um wenigstens eine wesentliche Menge der Säuretröpfchen, die das Aerosol ausmachen zu verdampfen, und
Strömenlassen des erhitzten gasförmigen Stroms in eine Gasnachbearbeitungskolonne.

2. Das Verfahren nach Anspruch 1, welches das Erhitzen durch Mischen eines heißen trockenen Gases in den gasförmigen Strom mit flüssigem Aerosol umfasst.

3. Das Verfahren nach Anspruch 2, wobei das heiße trockene Gas Luft umfasst.

4. Das Verfahren nach Anspruch 2, welches das Erhitzen durch Wiedereinführen eines erhitzten Gases, das auf der Austrittsseite der Gasnachbearbeitungskolonne hergestellt wird, in den gasförmigen Strom umfasst.

5. Das Verfahren nach Anspruch 2, wobei das Erhitzen ein Mischen des gasförmigen Stroms und des wiedereingeführten Stroms in einen Gasmischer umfasst.

6. Das Verfahren nach Anspruch 1, welches das Herstellen von Synthesegas umfasst.

7. Das Verfahren nach Anspruch 6, welches das Vergasen halogenierter Materialien umfasst.

8. Das Verfahren nach Anspruch 2, welches das Bereitstellen einer ausreichenden Verweilzeit für das gemlschte Gas und den Strom vor der Gasnachbearbeitungskolonne umfasst, um eine im Wesentlichen vollständige Verdampfung der Säuretröpfchen zu erlauben.

9. Das Verfahren nach Anspruch 1, welches das Erhitzen wenigstens eines Teils des gasförmigen Stroms in einem Wärmeaustauscher umfasst.

10. Vorrichtung Zum Verbessern der Produktion von Synthesegas in einem Vergasungsverfahren, umfassend:
eine Säureabsorptionskolonne in fluider Verbindung mit und auf der Eintrittsseite eines Gasmischers in fluider Verbindung mit und auf der Eintrittsseite einer Gasnachbearbeitungskolonne, und
Leitungen für erhitztes Recyclinggas von der Austrittsseite der Gasnachbearbeitungskolonne zu dem Gasmischer.

11. Die Vorrichtung nach Anspruch 10, umfassend Leitungen, die eine fluide Verbindung zwischen dem Gasmischer und der Gasnachbearbeitungskolonne von ausreichender Länge bereitstellen, um eine Verwellzeit bereitzustellen, um die Verdampfung wenigstens einer wesentlichen Menge an Säure zu erlauben, die in den Flüssigkeitströpfchen enthalten ist.

12. Die Vorrichtung nach Anspruch 10, welche einen Gaserhitzer auf der Austrittsseite der Gasnachbearbeitungskolonne umfasst.

13. Vorrichtung zum Verbessern der Produkten von Synthesegas in einem Oxidationsprozess, umfassend;
eine Säureabsorptionskolonne in flulder Verbindung mit und auf der Eintrittsseite eines Wärmetauschers in fluider Verbindung mit und auf der Eintrittsseite einer Gasnachbearbeitungskolonne.

14. Vorrichtung nach Anspruch 13, wobei die Säureabsorptionskolonne in einer Weise ausgebildet ist, um Halogenwasserstoffe zu absorbieren.

15. Vorrichtung nach Anspruch 13, wobei die Gasnachbearbeitungskolonne in einer Weise ausgebildet ist, um Synthesegas nachzubearbeiten.

16. Vorrichtung für die Herstellung von Synthesegas in einem Oxidationsprozess, umfassend:
eine Säureabsorptionskolonne in fluider Verbindung mit und auf der Eintrittsseite eines Gasmischers, in fluider Verbindung mit und auf der Eintrittsseite einer Gasnachbearbeitungskolonne, und
eine Quelle für erhitztes trockenes Gas in Verbindung mit dem Gasmischer.

17. Vorrichtung nach Anspruch 16, wobei das trockene Gas Luft umfasst.

## Revendications

1. Procédé permettant d'augmenter la production de gaz de synthèse dans un procédé d'oxydation, comportant :
- le fait de chauffer un courant gazeux provenant d'une unité d'absorption d'acide et contenant un aérosol de liquide, pour vaporiser au moins une quantité importante des gouttelettes d'acide formant l'aérosol,
- et le fait d'envoyer le courant gazeux chauffé dans une colonne de finissage de gaz.

2. Procédé conforme à la revendication 1, qui comprend le fait de chauffer le courant gazeux contenant l'aérosol de liquide en y mélangeant un gaz sec et chaud.

3. Procédé conforme à la revendication 2, dans lequel le gaz sec et chaud comprend de l'air.

4. Procédé conforme à la revendication 2, qui comprend le fait de chauffer le courant gazeux en y introduisant en recyclage un gaz chauffé produit en aval de la colonne de finissage de gaz.

5. Procédé conforme à la revendication 4, dans lequel le chauffage comprend le fait de mélanger le courant gazeux et le courant de recyclage dans un mélangeur à gaz.

6. Procédé conforme à la revendication 1, qui comprend le fait de produire un syngaz.

7. Procédé conforme à la revendication 6, qui comprend le fait de gazéifier des matières halogénées.

8. Procédé conforme à la revendication 2, qui comprend le fait de laisser au mélange de gaz et de courant gazeux, avant qu'il passe dans la colonne de finissage de gaz, un temps de séjour suffisant pour que la vaporisation des gouttelettes d'acide soit pratiquement complète.

9. Procédé conforme à la revendication 1, qui comprend le fait de chauffer au moins une partie du courant gazeux dans un échangeur de chaleur.

10. Appareillage permettant d'augmenter la production de gaz de synthèse dans un procédé de gazéification, comportant :
- une colonne d'absorption d'acide, située en amont d'un mélangeur à gaz et en communication pour fluide avec celui-ci, lui-même situé en amont d'une colonne de finissage de gaz et en communication pour fluide avec celle-ci,
- et des conduites permettant de recycler dans le mélangeur à gaz du gaz chauffé provenant d'un point situé en aval de la colonne de finissage de gaz.

11. Appareillage conforme à la revendication 10, comportant des conduites qui assurent, entre le mélangeur à gaz et la colonne de finissage de gaz, une communication pour fluide suffisamment longue pour que le mélange y séjourne le temps qu'il faut pour la vaporisation d'au moins une quantité importante de l'acide contenu dans les gouttelettes de liquide.

12. Appareillage conforme à la revendication 10, qui comporte un dispositif de chauffage de gaz, en aval de la colonne de finissage.

13. Appareillage permettant d'augmenter la production de gaz de synthèse dans un procédé d'oxydation, comportant :
- une colonne d'absorption d'acide, située en amont d'un échangeur de chaleur et en communication pour fluide avec celui-ci, lui-même situé en amont d'une colonne de finissage de gaz et en communication pour fluide avec celle-ci.

14. Appareillage conforme à la revendication 13, dans lequel la colonne d'absorption d'acide est conçue pour l'absorption des halogénures d'hydrogène.

15. Appareillage conforme à la revendication 13, dans lequel la colonne de finissage de gaz est conçue pour le finissage de syngaz.

16. Appareillage de production de gaz de synthèse dans un procédé d'oxydation, comportant :
- une colonne d'absorption d'acide, située en amont d'un mélangeur à gaz et en communication pour fluide avec celui-ci, lui-même situé en amont d'une colonne de finissage de gaz et en communication pour fluide avec celle-ci,
- et une source de gaz sec chauffé, en communication avec le mélangeur à gaz.

17. Appareillage conforme à la revendication 16, dans lequel le gaz sec comprend de l'air.
